# EUROPÄISCHE PATENTANMELDUNG

(11) **EP 3 805 841 A1**
(43) Veröffentlichungstag der Anmeldung: **14.04.2021**
(21) Anmeldenummer: 19202476.8
(22) Anmeldetag: 10.10.2019
(51) Int. Cl.: G02B 27/01

(54) **ANZEIGEVORRICHTUNG MIT EINSTÜCKIGER ABDECKSCHEIBE, INSBESONDERE FÜR DEN INNENRAUM VON KRAFTFAHRZEUGEN**

(71) Anmelder: Covestro Deutschland AG, 51373 Leverkusen (DE)
(72) Erfinder: HAGEN, Rainer, 51377 Leverkusen (DE); GROSSER, Ulrich, 51515 Kürten (DE); KLEIN, Andreas, 51371 Leverkusen (DE)
(74) Vertreter: Levpat

(57) **Zusammenfassung**

Gegenstand der vorliegenden Erfindung ist eine Anzeigevorrichtung mit gekrümmter Sichtseite umfassend eine einstückige Abdeckscheibe sowie auch umfassend mindestens zwei verschiedene Anzeige-Elemente, wobei mindestens eines der mindestens zwei Anzeige-Elemente als Projektionsfläche eingesetzt werden kann und mindestens ein anderes der mindestens zwei Anzeige-Elemente als Punktmatrixanzeige ausgestaltet ist. Alle der mindestens zwei Anzeige-Elemente befinden sich auf derselben Seite der Abdeckscheibe. Die erfindungsgemäße Anzeigevorrichtung soll geeignet sein, gleichzeitig sowohl ein Head-up-Display als auch ein Head-down-Display zu sein. Gegenstand der vorliegenden Erfindung ist auch die Verwendung der erfindungsgemäßen Anzeigevorrichtung im Fahrgastraum von Kraftfahrzeugen. Somit ist auch ein Kraftfahrzeug aufweisend die erfindungsgemäße Anzeigevorrichtung Gegenstand der vorliegenden Erfindung.

## Beschreibung

Gegenstand der vorliegenden Erfindung ist eine Anzeigevorrichtung mit gekrümmter Sichtseite umfassend eine einstückige Abdeckscheibe sowie auch umfassend mindestens zwei verschiedene Anzeige-Elemente, wobei mindestens eines der mindestens zwei Anzeige-Elemente als Projektionsfläche eingesetzt werden kann und mindestens ein anderes der mindestens zwei Anzeige-Elemente als Punktmatrixanzeige ausgestaltet ist. Alle der mindestens zwei Anzeige-Elemente befinden sich auf derselben Seite der Abdeckscheibe. Die erfindungsgemäße Anzeigevorrichtung soll geeignet sein, gleichzeitig sowohl ein Head-up-Display als auch ein Head-down-Display zu sein. Gegenstand der vorliegenden Erfindung ist auch die Verwendung der erfindungsgemäßen Anzeigevorrichtung im Fahrgastraum von Kraftfahrzeugen. Somit ist auch ein Kraftfahrzeug aufweisend die erfindungsgemäße Anzeigevorrichtung Gegenstand der vorliegenden Erfindung.

Anzeigevorrichtungen - auch für Kraftfahrzeuge - sind aus dem Stand der Technik hinlänglich bekannt. Weil immer mehr Informationen dem Nutzer zur Verfügung gestellt werden müssen, wurden in den vergangenen Jahren neue Produkte mit größeren Anzeigen, höheren Auflösungen, dreidimensionalen Darstellungen oder transparenten Projektionsscheiben, den sogenannten Combiner-Scheiben, entwickelt.

Je nachdem, ob der Kopf eines Betrachters nach unten geneigt werden muss oder der Blick auf eine Anzeigevorrichtung geradeaus gerichtet ist, unterscheidet man zwischen Head-down- und Head-up-Displays. Weil Head-up-Displays im direkten, oder mit anderen Worten, primären Sichtfeld des Betrachters liegen, also der Bereich, den der Betrachter beim Geradeaussehen ohne Kopfneigung sieht, sind sie im Gegensatz zu Head-down-Displays optisch transparent oder teiltransparent, damit beispielsweise einem Fahrer in einem Kraftfahrzeug nicht der Blick auf einen das Kraftfahrzeug umgebenden Straßenverkehr behindert wird. Head-up-Displays bestehen im Allgemeinen aus einer bildgebenden Einheit, einem Optikmodul, beispielsweise aufweisend Linsen oder Spiegel, und einer transparenten Projektionsfläche. Head-down-Displays bestehen im Allgemeinen aus einem Flachbildschirm mit Punktmatrixanzeige.

DE 10 2005 026 787 B4 offenbart beispielsweise eine Anzeigevorrichtung für ein Kraftfahrzeug. Bei der dort offenbarten Anzeigevorrichtung sind mindestens zwei Anzeige-Elemente (Displays) derart angeordnet, dass deren optische Informationen auf eine gemeinsame Sichtfläche spiegelbar sind, wodurch der Eindruck eines gemeinsamen, vergrößerten Informationsbereichs entsteht. Die Vorrichtung bedingt aber einen aufwendigen Aufbau mit zahlreichen Einzelteilen. Zudem hat sie eine ebene Sichtoberfläche und es ist wegen der hintereinander angeordneten Anzeige-Elemente nicht möglich, die gleichen Inhalte zwei Betrachtern an verschiedenen Positionen, also zum Beispiel Fahrer und Beifahrer, zugleich zu liefern. Dadurch kann die Vorrichtung entweder nur eine Head-up-Anzeige oder eine Head-down-Anzeige sein, nicht aber gleichzeitig sowohl eine Head-up-Anzeige als auch eine Head-down-Anzeige.

DE 10 2014 006 724 B3 offenbart eine Anzeige für Kraftfahrzeuge mit einer spiegelnden und lichtdurchlässigen Combiner-Scheibe und einer Projektionsvorrichtung. Mit dieser Vorrichtung kann auf der Combiner-Scheibe autostereoskopisch eine 3D-Darstellung eines Objekts erzeugt werden. Jedoch ist diese Vorrichtung aufgrund der intransparenten Fläche im Hintergrund der Combiner-Scheibe nur als Head-down-Display brauchbar, nicht aber als Head-up-Anzeige, insbesondere nicht gleichzeitig sowohl als Head-up-Anzeige als auch als Head-down-Anzeige.

DE 10 2013 205 926 A1 offenbart einen keilförmigen Combiner als Head-up-Display. Wegen der ebenen Oberfläche der Anzeigevorrichtung ist diese entweder nur als Head-up-Display oder nur als Head-down-Display brauchbar, nicht aber gleichzeitig sowohl als Head-up-Anzeige als auch als Head-down-Anzeige.

DE 692 23 856 T2 offenbart eine Kraftfahrzeug-Anzeigevorrichtung, deren Schutzfenster eine Krümmung aufweist. Auf Grund des Aufbaus dieser Anzeigevorrichtung ist sie jedoch nur als Head-down-Anzeige geeignet.

Weil zunehmend viele unterschiedliche und teils komplexe Informationen im Sichtfeld des Fahrers zur Verfügung gestellt werden müssen, werden Anzeigevorrichtungen zunehmend größer gestaltet. Nicht nur für den Fahrer, sondern zunehmend auch für einen Beifahrer oder für einen autonom fahrenden Fahrzeuginsassen, sind ergonomisch und sicherheitstechnisch günstig im Sichtfeld platzierte Anzeigevorrichtungen wichtig. Möglichst großformatige und dennoch ergonomisch und sicherheitstechnisch günstig im Sichtfeld platzierte Anzeigevorrichtungen sind daher Gegenstand aktueller technischer Entwicklungen. Weil aber der für Anzeigevorrichtungen verfügbare Bauraum, insbesondere in einem Fahrzeuginnenraum, in der Regel eingeschränkt ist, fallen einzelne Anzeige-Elemente einer Anzeigevorrichtung oft zu klein aus, um schnell und sicher abgelesen werden zu können, oder sind ungünstig nur am Rande des Sichtfelds eines Betrachters platziert, wodurch sie ebenfalls nicht schnell und sicher abgelesen werden können. Darunter leiden Ergonomie, Komfort und Sicherheit.

Aufgabe der vorliegenden Erfindung ist es, die Nachteile des Stands der Technik zu überwinden.

Insbesondere Aufgabe der vorliegenden Erfindung ist es, eine Anzeigevorrichtung ausschließlich mit digitalen Anzeige-Elementen zur Verfügung zu stellen, in der bei einfachem und kostengünstigem Aufbau einem Fahrzeuginsassen ein erweiterter Informationsgehalt angeboten wird, die wenig Bauraum braucht und die ergonomisch und sicherheitstechnisch günstig im Sichtfeld eines Fahrzeuginsassen, insbesondere im Sichtfeld des Fahrers, platziert werden kann.

Die Aufgabe wird durch die Gegenstände der unabhängigen Ansprüche gelöst. Vorteilhafte Weiterbildungen der Erfindung ergeben sich durch die Merkmale der unabhängigen Ansprüche.

Insbesondere gelöst wird die Aufgabe durch eine
Anzeigevorrichtung umfassend:
eine einstückige Abdeckscheibe,
mindestens zwei verschiedene Anzeigeelemente,
wobei die Abdeckscheibe zumindest auf ihrer Vorderseite an mindestens einer Stelle gekrümmt ist, bevorzugt dreidimensional gekrümmt ist, und
wobei sich alle der mindestens zwei Anzeige-Elemente auf der Rückseite der Abdeckscheibe befinden, und,
wobei mindestens eines der mindestens zwei Anzeige-Elemente als Projektionsfläche eingesetzt werden kann, und
wobei mindestens ein anderes der mindestens zwei Anzeige-Elemente als Flachdisplay mit Punktmatrixanzeige ausgestaltet ist, und
wobei die Anzeigevorrichtung dazu geeignet ist, gleichzeitig sowohl ein Head-up-Display als auch ein Head-down-Display zu sein, oder dazu geeignet ist, gleichzeitig sowohl ein Display, das ein Betrachter beim Geradeaussehen sieht, als auch ein Display, das ein Betrachter beim Sehen mit nach links oder nach rechts gewandtem Kopf sieht, zu sein.

Die Anzeigevorrichtung kann auch dazu geeignet sein, sowohl gleichzeitig sowohl ein Head-up-Display als auch ein Head-down-Display zu sein, als auch gleichzeitig sowohl ein Display, das ein Betrachter beim Geradeaussehen sieht, als auch ein Display, das ein Betrachter beim Sehen mit nach links oder nach rechts gewandtem Kopf sieht, zu sein.

Im Sinne der vorliegenden Erfindung bedeutet der Begriff "gekrümmt" im Zusammenhang mit der Abdeckscheibe, dass die Abdeckscheibe mindestens eine Schnittfläche aufweist, für die gilt, dass
die Umfangskurve dieser mindestens einen Schnittfläche mindestens einen Abschnitt auf der Vorderseite aufweist, der konkav oder konvex ausbildet ist, wobei der jeweilige Schnitt durch die Abdeckscheibe rechtwinklig zur Vorderseite der Abdeckscheibe gelegt wird. Bevorzugt ist der Abschnitt, der einem gekrümmten Abschnitt "gegenüberliegt", in der gleichen Weise gekrümmt.

Im Sinne der vorliegenden Erfindung bedeutet, dass ein zweiter Abschnitt einem ersten Abschnitt "gegenüberliegt", wenn gilt:
dass der zweite Abschnitt durch die Menge aller Punkte gekennzeichnet ist, für die gilt,
dass eine Strecke rechtwinklig ausgehend von einem Punkt auf dem ersten Abschnitt in einen Punkt auf dem zweiten Abschnitt endet.

Im Sinne der vorliegenden Erfindung bedeutet der Begriff "dreidimensional gekrümmt" im Zusammenhang mit der Abdeckscheibe, dass die Abdeckscheibe
mindestens zwei zueinander senkrecht stehende Schnittflächen aufweist, für die jeweils unabhängig voneinander gilt, dass
die Umfangskurve der jeweiligen Schnittfläche mindestens einen Abschnitt auf der Vorderseite aufweist, der konkav oder konvex ausbildet ist,
wobei der jeweilige Schnitt durch die Komponente rechtwinklig zu der Vorderseite gelegt wird. Bevorzugt ist der Abschnitt, der einem gekrümmten Abschnitt "gegenüberliegt", in der gleichen Weise gekrümmt.

Alle Angaben in der vorliegenden Schrift zur räumlichen Anordnung der Anzeigevorrichtung oder zur räumlichen Anordnung einer oder mehrerer ihrer Bestandteile, insbesondere der Abdeckscheibe, gehen immer von der bestimmungsgemäßen Verwendung der Anzeigevorrichtung, insbesondere von dem bestimmungsgemäßen Einbau der Anzeigevorrichtung aus.
Dabei wird auch davon ausgegangen, dass sich ein Betrachter der Anzeigevorrichtung, insbesondere ein Fahrer oder ein Fahrzeuginsasse, vor der Anzeigevorrichtung befindet.

Bei der Oberfläche der Abdeckscheibe, die dem Betrachter zugewandt ist, handelt es sich um eine der beiden Großflächen der Abdeckscheibe. Die Abdeckscheibe weist zwei Großflächen auf, eine Vorderseite, die dem Betrachter zugewandt ist und auch die Sichtseite ist und auch Sichtseite genannt wird, und eine Rückseite, die dem Betrachter abgewandt ist.
Außerdem weist die Abdeckscheibe mindestens eine, bevorzugt mindestens zwei, besonders bevorzugt mindestens vier, Seitenflächen auf, deren Summe ihrer Flächen bevorzugt geringer ist als die Fläche jeder der beiden Großflächen.

Die Dicke der Abdeckscheibe beträgt 0,3 mm bis 6 mm, bevorzugt 0,5 mm bis 3 mm, besonders bevorzugt 1,2 mm bis 2,4 mm.

Ein Anzeige-Element ist eine Komponente, also ein Bestandteil der Anzeigevorrichtung. Eine Anzeigevorrichtung kann also, wie in der vorliegenden Erfindung, mehrere AnzeigeElemente umfassen; eine Anzeigevorrichtung kann aber auch nur ein Anzeige-Element umfassen. Anzeige-Elemente werden im Stand der Technik häufig auch als Displays bezeichnet. Im Sinne der vorliegenden Erfindung wird unter einem Anzeige-Element ein Element/Bereich verstanden, auf dem digital dargestellte Informationen abgelesen werden können. Als Anzeige-Elemente können beispielsweise Projektionsflächen oder Segmentdisplays oder Matrixdisplays angeführt werden.

Die erfindungsgemäße Anzeigevorrichtung umfasst mindestens zwei Anzeige-Elemente, sie kann aber auch mehr als zwei Anzeige-Elemente umfassen, beispielsweise drei, vier, fünf, sechs oder sogar mehr als sechs. Mindestens zwei der mindestens zwei Anzeige-Elemente müssen technisch unterschiedlich sein, wobei aber mindestens eines der mindestens zwei Anzeige-Elemente als Projektionsfläche verwendet werden kann und ein anderes der mindestens zwei Anzeige-Elemente eine Punktmatrixanzeige ist. Bei nur zwei Anzeige-Elementen ist eines der Anzeige-Elemente als Projektionsfläche nutzbar und das andere der Anzeige-Elemente ist eine Punktmatrixanzeige. Bei drei Anzeige-Elementen können nun zwei der Anzeige-Elemente jeweils als Projektionsfläche einsetzbar sein und das andere Anzeige-Elemente ist eine Punktmatrixanzeige oder es können zwei der Anzeige-Elemente jeweils eine Punktmatrixanzeige sein und das andere der Anzeige-Elemente kann als Projektionsfläche nutzbar sein.

Die Oberfläche der Abdeckscheibe, die dem Betrachter zugewandt ist, ist größer als oder genau so groß wie die Summe der dem Betrachter zugewandten Oberflächen der AnzeigeElemente. Somit werden - sofern sich alle Anzeige-Elemente auf der einem Betrachter abgewandten Oberfläche der Abdeckscheibe befinden - diese bei geeigneter Anordnung der Anzeige-Elemente zueinander vollständig von der Abdeckscheibe überdeckt.

Die Abdeckscheibe ist somit für die dahinter liegenden Anzeige-Elemente geschlossen. Das erzeugt für den Betrachter den Eindruck eines einzigen Geräts; optische Brüche werden vermieden. Dies ist zum einen ästhetisch ansprechend. Zum anderen und wichtiger ist es, dass der Blick des Betrachters nicht an optischen Brüchen "hängen bleiben" kann. Somit kann die erfindungsgemäße Anzeigevorrichtung schneller und sicherer abgelesen werden.

Bei der Verwendung der Anzeigevorrichtung in dem Fahrgastraum eines Kraftfahrzeugs, das von einem Fahrer durch den Straßenverkehr gesteuert wird, bedeutet dies beispielsweise, dass der Fahrer schneller und sicherer Position des Kraftfahrzeugs (beispielsweise angezeigt auf der Projektionsfläche) und Geschwindigkeit des Kraftfahrzeugs (beispielsweise angezeigt auf der Punktmatrixanzeige) feststellen kann, und damit zum einen, soweit nötig, Position und/oder Geschwindigkeit schneller und sicherer ändern kann, und zum anderen schneller und sicherer den Blick wieder dem Straßenverkehr zuwenden kann.

Neben den genannten Bestandteilen - einstückige Abdeckscheibe und mindestens zwei verschiedene Anzeige-Elemente - kann die Anzeigevorrichtung weitere Bestandteile umfassen. Beispiele für diese weiteren Bestandteile sind:
- eine transparente Deckschicht, die sich auf der Sichtseite der Abdeckscheibe befindet und die beispielsweise die Abdeckscheibe vor Schäden durch Zerkratzen oder durch UV-Strahlung schützen soll; diese Deckschicht kann beispielsweise als Lack oder als Folie oder als beschichtete Folie ausgeführt sein; diese Deckschicht kann zusätzlich als Anti-Reflex-, Anti-Glare- oder Anti-Fingerprint-Schicht dienen;
- eine Schicht eines Klebers, mit der die Punktmatrixanzeige an der Abdeckscheibe angebracht ist, wobei es sich bei dem Kleber um einen optischen transparenten Kleber handelt;
- eine Schicht eines Klebers, mit der die Projektionsfläche an der Abdeckscheibe angebracht ist, wobei es sich bei dem Kleber um einen optisch transparenten Kleber handelt;
- eine resistive oder eine kapazitive Touch-Sensorfolie;
- eine Black Panel-Folie;
- eine Kamera;
- ein Infrarot-Sensor;
- ein Dekorelement, insbesondere eine Dekorfolie.

Im Sinne der vorliegenden Erfindung wird ein Gegenstand, beispielsweise eine Schicht, eine Folie, eine Scheibe oder eine Vorrichtung, als transparent angesehen, wenn die Transmission Ty mindestens 75 %, bevorzugt mindestens 80 %, besonders bevorzugt mindestens 85 % beträgt und zusätzlich die Trübung kleiner als 5%, bevorzugt kleiner als 3%, und besonders bevorzugt kleiner als 2% ist. Diese Transmission Ty wird bestimmt nach ISO 13468-2:2006 (D65, 10°). Diese Trübung wird bestimmt nach ASTM D1003:2013. Beträgt die Transmission weniger als 75 % oder die Trübung mehr als 5%, so wird die Projektionsfläche als nichttransparent angesehen.

Die Projektionsfläche kann insbesondere zur Anzeige von Bild- und Videoinformationen genutzt werden. Als Video werden dabei bewegte Bilder bezeichnet, also Bilder, die mit einer Abfolge von mehr als 16 Bildern pro Sekunde angezeigt werden. Die Projektionsfläche kann je nach Anwendungsfall zur Rückprojektion oder zur Aufprojektion genutzt werden. Rückprojektion heißt, der Projektor befindet sich hinter der Projektionsfläche. Aufprojektion heißt, der Projektor befindet sich vor der Projektionsfläche.

Dass die erfindungsgemäße einstückige Abdeckscheibe als Projektionsfläche eingesetzt werden kann, wird bevorzugt dadurch bewirkt, dass die Projektionsfläche ein oder mehrere Mitglieder umfasst ausgewählt aus der Gruppe optischer Elemente umfassend die Mitglieder lichtlenkende Mikrostruktur, lichtlenkende Nanostruktur, diffraktiv-optisches Element, holografisch-optisches Element, gerichteter Diffusor, Fresnel-Linse, Mattglas, Volumenstreuer, einlagige metallische Reflexionsschicht, mehrlagige metallische Reflexionsschicht, metallische Interferenzschicht, Interferenzfolie und Reflexfolie.

Punktmatrixanzeigen sind optische Anzeigen, die aus einzelnen Bildpunkten in einer Matrix aus horizontalen Zeilen und vertikalen Spalten bestehen. Punktmatrixanzeigen sind schon seit langem bekannt, beispielsweise von Flüssigkristalldisplays (LCD), Leuchtdioden (LED) oder organischen Leuchtdioden (OLED). Zu Punktmatrixanzeigen zählen im Sinne der Erfindung auch Segmentanzeigen, beispielsweise LED-Segment-Displays.

Bevorzugt ist es so, dass bei der erfindungsgemäßen Anzeigevorrichtung die Flächennormale im Flächenmittelpunkt der der Abdeckscheibe zugewandten Fläche einer ersten der mindestens zwei Anzeige-Elemente nicht parallel zu der Flächennormalen im Flächenmittelpunkt der der Abdeckscheibe zugewandten Fläche einer zweiten der mindestens zwei AnzeigeElemente ist.

Das heißt mit anderen Worten, dass ein erstes Anzeige-Element in eine andere Richtung ausgerichtet ist als ein zweites Anzeige-Element. Beispielsweise kann ein erstes Anzeige-Element nach oben ausgerichtet sein und ein zweites Anzeige-Element dann nach unten oder horizontal ausgerichtet sein, oder ein ersten Anzeige-Element kann nach rechts ausgerichtet sein und ein zweites Anzeige-Element dann nach links ausgerichtet sein.
Bevorzugt ist ein erstes Anzeige-Element nach oben ausgerichtet und ein zweites Anzeige-Element dann nach unten oder horizontal ausgerichtet.
Auf diese Weise kann ein Betrachter das erste Anzeige-Element sehen, wenn er nach oben sieht und das zweite Anzeige-Element, wenn er nach unten sieht.

Alternativ bevorzugt ist ein erstes Anzeige-Element nach rechts ausgerichtet und ein zweites Anzeige-Element dann nach links ausgerichtet.
Auf diese Weise kann ein Betrachter das erste Anzeige-Element sehen, wenn er nach links sieht, und das zweite Anzeige-Element, wenn er nach rechts sieht.

Weiter alternativ bevorzugt ist ein erstes Anzeige-Element nach oben ausgerichtet, ein zweites Anzeige-Element dann nach unten oder horizontal ausgerichtet, ein drittes Anzeige-Element dann nach links oder rechts ausgerichtet.

Weiter alternativ bevorzugt ist ein erstes Anzeige-Element nach oben ausgerichtet, ein zweites Anzeige-Element dann nach unten oder horizontal ausgerichtet, ein drittes Anzeige-Element dann nach links oder rechts und ein viertes Anzeige-Element dann nach links, wenn das dritte Anzeige-Element nach rechts ausgerichtet ist, oder nach rechts, wenn das dritte Anzeige-Element nach links ausgerichtet ist.

Durch die entsprechende Krümmung der Abdeckscheibe wird erreicht, dass die Anzeigevorrichtung dazu geeignet ist, gleichzeitig sowohl ein Head-up-Display als auch ein ergonomisch ausgelegtes Head-down-Display zu sein:
oder dazu geeignet ist, gleichzeitig sowohl ein Display, das ein Betrachter beim Geradeaussehen sieht, als auch ein Display, das ein Betrachter beim Sehen mit nach links oder nach recht gewandtem Kopf sieht, zu sein.

Bevorzugt befindet sich die Projektionsfläche im oberen Bereich der Anzeigevorrichtung. Dies ist insbesondere bevorzugt, wenn die Anzeigevorrichtung gleichzeitig sowohl als Head-up- und als auch als Head-down-Display geeignet sein soll.

Im oberen Teil der Anzeigevorrichtung ist ein dort befindliches Anzeige-Element, bevorzugt also die Projektionsfläche, so geneigt, wie es die Anzeigeoptik erfordert, um ein helles und scharfes Bild darstellen zu können. Im unteren Teil der Anzeigevorrichtung ist ein dort befindliches Anzeige-Element so orientiert, wie es das Sichtfeld erfordert. Erfindungsgemäß ist das Anzeige-Element so zum Betrachter hin orientiert, dass eine verzerrungsfreie, kontrastreiche und fehlerfreie Darstellung einer Information möglich ist.

In einer hierbei bevorzugten Ausführungsform ist die erfindungsgemäße Vorderseite der Abdeckscheibe im Sichtfeld des Head-up-Displays weitgehend, also mit einer Abweichung von höchstens +/- 30°, bevorzugt mit einer Abweichung von höchstens +/- 15°, senkrecht orientiert, und im Sichtfeld des mindestens einen Head-down-Displays dem Fahrer zugeneigt. In einer hierbei besonders bevorzugten Ausführungsform ist die Abdeckscheibe in den Sichtfeldern der Anzeige-Elemente, also dort, wo die Anzeige der Anzeige-Elemente auf der Sichtseite der Abdeckscheibe sichtbar ist, eben, weist dort also keine Krümmung auf, während sie zwischen Head-up- und Head-down-Bereichen abgewinkelt ist, also eine Krümmung aufweist, um den Übergang zwischen den beiden unterschiedlich orientierten Anzeige-Elementflächen zu gestalten. So kann sich die Anzeigevorrichtung im unteren Bereich in die Form der Instrumententafel oder Mittelkonsole einfügen und im oberen Bereich wie eine frei stehende Combiner-Scheibe ausgeführt sein.

Durch die Krümmung der Abdeckscheibe wird erreicht, dass die Anzeigevorrichtung dazu geeignet ist, gleichzeitig sowohl ein horizontal ausgestrecktes Instrumenten-Display mit Punktmatrixanzeige als auch ein Head-up-Display mit Combiner-Scheibe, in die beispielsweise digitale Kamerabilder als Rückspiegelersatz eingeblendet werden können, darzustellen.

In einer alternativen Ausführungsform ist der untere Bereich der Abdeckscheibe entsprechend einem Türpanel einer Kraftfahrzeugtür ausgeformt, so dass ein Anzeige-Element in eine Seitentür eingebaut werden kann, während der obere Bereich wie eine frei stehende Combiner-Scheibe in ein Seitenfenster hineinragt und durch Aufprojektion als Fenster-Display fungiert. Auch kann alternativ die Seitenscheibe als Combiner-Scheibe dienen, wenn das Seitenfenster des Fahrzeugs fest montiert und nicht zu öffnen ist.

Weiter bevorzugt oder alternativ ist es so, dass bei der erfindungsgemäßen Anzeigevorrichtung das mindestens eine Anzeige-Element, das als Projektionsfläche eingesetzt werden kann, elektrisch zwischen einem transparenten und einen nicht-transparenten Zustand umschaltbar ist.

Dass dieses mindestens eine Anzeige-Element elektrisch zwischen einem transparenten und einen nicht-transparenten Zustand umschaltbar ist, kann beispielsweise dadurch bewirkt werden, dass die Projektionsfläche ein oder mehrere intelligente Folien (Smart Films), umfassend bevorzugt Flüssigkristalldrehzellen zwischen Polarisatoren, polymerdispergierte Flüssigkristalle (PDLC), polymervernetzte Flüssigkristalle (PNLC), Flüssigkristalldispergierte Polymere (LCDP) oder elektrochrome Farbstoffsysteme, umfasst.

Die intelligente Folie umfasst mindestens eine sogenannte aktive Schicht, auch Funktionsschicht genannt, und mindestens zwei sich gegenüberliegende und voneinander getrennte Elektroden. Die aktive Schicht verändert sich physikalisch oder chemisch durch elektrische Stimulation. Die Elektroden dienen zum Anlegen eines elektrischen Feldes und damit zur Umschaltung der dazwischenliegenden Funktionsschicht zwischen einem transparenten und einem nicht-transparenten Zustand.

Diese Elektroden sind transparent und bestehen bevorzugt aus leitfähigen transparenten Oxiden, wie z.B. Indium-Zinn-Oxid (ITO), Fluor-dotiertem Zinn-Oxid (FTO), Antimondotiertem Zinn-Oxid (ATO) oder Aluminium-dotiertem Zink-Oxid (AZO). Alternativ bestehen die Elektroden aus leitfähigem organischen Material, wie z.B. Poly-3,4-ethylendioxythiophen.

Besonders bevorzugt bestehen diese Elektroden aus Brechungsindex-angepassten leitfähigen transparenten Oxiden, wie z.B. Index-Matched Indium-Zinn-Oxid (IMITO).

Die Elektrodenfläche entspricht der Fläche, die zwischen einem transparenten und einen nicht-transparenten Zustand umschaltbar ist.

Bevorzugt umfasst die Elektrodenfläche die gesamte Fläche der intelligenten Folie, so dass diese Folie als Ganzes zwischen einem transparenten und einen nicht-transparenten Zustand umschaltbar ist.

Die elektrische Ansteuerung der Elektroden geschieht über elektrisch verbundene Leiterbahnen, die eine Kontaktierung durch eine äußere elektrische Spannungsquelle möglich machen.

Die Leiterbahnen können auf die Elektroden aufgedruckt, aufgeklebt oder in einer anderen einem Fachmann bekannten Weise aufgebracht werden.

Die Leiterbahnen bestehen z.B. aus Kupferfolie, Silberleitpaste, Silberleitkleber, Silikonbasiertem Leitkleber, Silikonpaste, oder einem anisotrop leitfähigen Klebstoff wie z.B. duroplastischen silbergefüllten Harzen.

Die intelligente Folie ist rückseitig auf der Abdeckscheibe im Bereich des mindestens einen Anzeige-Elements, welches als Projektionsfläche eingesetzt werden kann, aufgebracht. Bevorzugt erstreckt sich die intelligente Folie über die gesamte Fläche des mindestens einen Anzeige-Elements, welches als Projektionsfläche eingesetzt werden kann. Die intelligente Folie kann durch einen optischen transparenten Kleber mit der Abdeckscheibe verklebt werden oder durch Hinterspritzen bei der Herstellung der Abdeckscheibe mit dieser verbunden werden.

Die Elektrodenfläche kann unterbrochen sein, um z.B. eine nicht schaltende, immer transparente Teilfläche, sichtbar zu machen, z.B. um eine Bildinformation wie eine Signatur optisch sichtbar zu machen. Die Elektrodenfläche kann ferner unterbrochen sein, um z.B. angrenzende Bereiche der intelligenten Folie getrennt voneinander schalten zu können. Eine mögliche Ausführungsform ist der Jalousieeffekt, bei dem nur einzelne Segmente umgeschaltet werden, um partielle Nicht-Transparenz oder dynamische Schalteffekte zu erzielen.

Die Elektrodenfläche kann eine unterschiedliche Leitfähigkeit aufweisen, so dass lateral unterschiedlich hohe Feldstärken zwischen den Elektroden entstehen. Dies kann verwendet werden, um einen Gradienten in der Transparenz der Folie zu erzeugen.

Weiter bevorzugt ist es so, dass bei der erfindungsgemäßen Anzeigevorrichtung die Abdeckscheibe im Wesentlichen aus Glas oder einem transparenten thermoplastischen Material besteht.

Im Sinne der vorliegenden Erfindung bedeutet die Formulierung "wobei die Abdeckscheibe im Wesentlichen aus Glas oder einem thermoplastischen Material besteht", dass die Abdeckscheibe zu mindestens 50 Gew.-%, bevorzugt zu mindestens 65 Gew.-%, bevorzugt zu mindestens 80 Gew.-%, besonders bevorzugt zu mindestens 95 Gew.-% aus Glas oder einem transparenten thermoplastischen Material besteht.

Wenn die Abdeckscheibe im Wesentlichen aus einem transparenten thermoplastischen Material besteht, basiert dieses transparente thermoplastische Material bevorzugt auf einem der nachfolgenden Polymere:
aromatischem Polycarbonat (PC), einschließlich Copolycarbonat, Polyestercarbonat, Polystyrol (PS), Styrol-Copolymeren wie z.B. transparentes Polystyrolacrylnitril (PSAN), Polyalkylenen wie Polyethylen (PE) und Polypropylen (PP), aromatischem Polyester wie Polyethylenterephthalat (PET) und Polybutylenterephthalat (PBT), PET-Cyclohexandimethanol-Copolymer (PETG), Polyethylennaphthalat (PEN), Polyacrylat, Copolyacrylat, insbesondere Poly- oder Copolymethylmethacrylaten wie Polymethylmethacrylat (PMMA), Polyimide (z.B. PMMI), Polyethersulfonen, thermoplastischen Polyurethanen, cyclischen Olefinpolymeren oder -copolymeren (COP bzw. COC) oder Mischungen der genannten Komponenten, sofern diese Mischungen transparent sind, bevorzugt aus aromatischem Polycarbonat und/oder Polymethylmethacrylat, besonders bevorzugt auf aromatischem Polycarbonat.

Polycarbonate im Sinn der vorliegenden Erfindung sind sowohl Homopolycarbonate als auch Copolycarbonate. Die Polycarbonate können in bekannter Weise linear oder verzweigt sein. Sofern im Rahmen der vorliegenden Erfindung von "Polycarbonaten" gesprochen wird, sind stets aromatische Polycarbonate gemeint, auch, wenn nicht explizit erwähnt.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1 -Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1 -Bis-(4-hydroxyphenyl)-3,3,5-trimethylcyclohexan (Bisphenol TMC) sowie die Bisphenole der Formeln (I) bis (III) 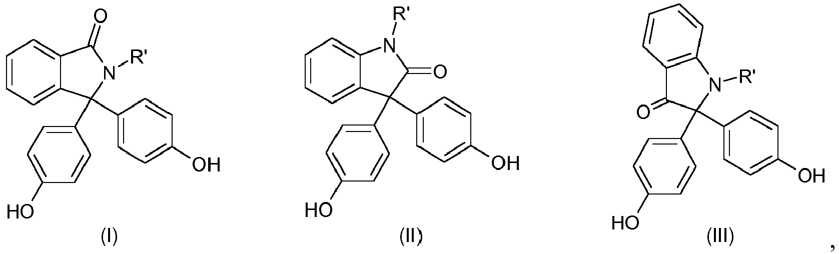 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1 -Bis-(4-hydroxyphenyl)-cyclohexan und 1,1 -Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt. Die in den erfindungsgemäßen Zusammensetzungen enthaltenen aromatischen Polycarbonate sind bevorzugt nach dem Grenzflächenverfahren hergestellt.

Bevorzugt werden lineare Polycarbonate eingesetzt.

Die aromatischen Polycarbonate der vorliegenden Erfindung besitzen bevorzugt gewichtsmittlere Molekulargewichte M_{w} zwischen 8.000 und 30.000 g/mol, vorzugsweise zwischen 20.000-28.000 g/mol, weiter bevorzugt zwischen 22.000 - 26.500 g/mol, noch weiter und besonders bevorzugt zwischen 24.000 - 26.500 g/mol. Die Werte gelten für die Ermittlung durch Gelpermeationschromotographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatisches Polycarbonats, gemessen nach ISO 1133:2012-03 bei 300 °C und 1,2 kg, beträgt bevorzugt 5 bis 35 cm³/(10 min), weiter bevorzugt 10 bis 20 cm³/(10 min).

Die Mw- und MVR-Angaben beziehen sich auf die in der Zusammensetzung enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

"Basiert auf bedeutet, dass vorzugsweise mindestens 60 Gew.-%, weiter bevorzugt mindestens 70 Gew.-%, noch weiter bevorzugt mindestens 80 Gew.-% der Gesamtzusammensetzung des thermoplastischen Materials das entsprechende Polymer sind. Das thermoplastische Material umfasst neben einen oder mehreren der genannten Polymere bevorzugt weitere übliche Additive. Solche sind z.B. Flammschutzmittel, Antistatika, UV-Absorber, Stabilisatoren, zum Beispiel Thermostabilisatoren, Antioxidantien und Entformungsmittel. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden. Geeignete Entformungsmittel sind zum Beispiel solche auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Besonders bevorzugt enthält die Zusammensetzung weniger als 0,1 Gew.-%, ganz besonders bevorzugt sind die Zusammensetzungen der Substratschicht frei von Streuadditiven, z.B. solchen auf Basis von Acrylat, Polyethylen, Polypropylen, Polystyrol, Glas, Aluminiumoxid und/oder Siliziumdioxid. Ferner enthält die Zusammensetzung besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiO2, Kreide und/oder Titandioxid, beschichtet und/oder unbeschichtet.

Ferner enthält die Zusammensetzung besonders bevorzugt weniger als 0,1 Gew.-%, ganz besonders bevorzugt ist die Zusammensetzung frei von nanopartikulären Systemen wie Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Das transparente Material kann mit Farbmitteln versetzt sein, um den Farbeindruck zu ändern. Bevorzugt ist das thermoplastische Material transparent eingefärbt, besonders bevorzugt transparent neutral-grau eingefärbt. Dieses hat den Vorteil, dass der Farbraum der hinter der transparenten Schicht liegenden Lichtquelle, welche Informationen transportiert und beispielsweise ein Display sein kann, erhalten bleibt.

Die transparente Schicht wird bevorzugt mittels Spritzgussverfahren hergestellt. Auch Thermoformen ist grundsätzlich denkbar.

Die Abdeckscheibe kann im Wesentlichen auch aus einem Verbund aus Glas und einem transparenten thermoplastischen Material bestehen.

Weiter bevorzugt ist es so, dass bei der erfindungsgemäßen Anzeigevorrichtung die Abdeckscheibe an mindestens einer Stelle in Form einer Welle mehrfach gekrümmt ist, bevorzugt an mindestens einer Stelle in Form einer Welle mehrfach dreidimensional gekrümmt ist.

Im Sinne der vorliegenden Erfindung bedeutet der Begriff "in Form einer Welle mehrfach gekrümmt" im Zusammenhang mit der Abdeckscheibe, dass die Abdeckscheibe mindestens eine Schnittfläche aufweist, für die gilt, dass
die Umfangskurve dieser mindestens einen Schnittfläche mindestens einen Abschnitt auf der Vorderseite aufweist, bei dem ein Unterabschnitt konkav ausgebildet und ein anderer Unterabschnitt konvex ausbildet ist,
wobei der jeweilige Schnitt durch die Komponente rechtwinklig zur Vorderseite der Abdeckscheibe gelegt wird. Bevorzugt ist der Abschnitt, der einem gekrümmten Abschnitt "gegenüberliegt", in der gleichen Weise gekrümmt.

Im Sinne der vorliegenden Erfindung bedeutet der Begriff "in Form einer Welle mehrfachdreidimensional gekrümmt" im Zusammenhang mit der Abdeckscheibe, dass die Abdeckscheibe
mindestens zwei zueinander senkrecht stehende Schnittflächen aufweist, für die jeweils unabhängig voneinander gilt, dass
die Umfangskurve der jeweiligen Schnittfläche mindestens einen Abschnitt auf der Vorderseite aufweist, bei dem ein Unterabschnitt konkav ausgebildet und ein anderer Unterabschnitt konvex ausbildet ist,
wobei der jeweilige Schnitt durch die Komponente rechtwinklig zur Vorderseite der Abdeckscheibe gelegt wird. Bevorzugt ist der Abschnitt, der einem gekrümmten Abschnitt "gegenüberliegt", in der gleichen Weise gekrümmt.

Durch die mehrfache Krümmung der Abdeckscheibe in Form einer Welle wird besonders gut erreicht, dass die Anzeigevorrichtung dazu geeignet ist, gleichzeitig sowohl ein Head-up-Display als auch ein Head-down-Display zu sein. Der Blick eines Betrachters kann in der Head-up-Position den oberen Teil der Anzeigevorrichtung sehen und in der Head-up-Position den unteren Teil der Anzeigevorrichtung. Besonders gut wird diese Wirkung erzielt, wenn der konkave Teil der wellenförmigen Krümmung im oberen Bereich der Anzeigevorrichtung liegt und der konvexe Teil der wellenförmigen Krümmung im unteren Bereich der Anzeigevorrichtung liegt.

Weiter bevorzugt ist es so, dass bei der erfindungsgemäßen Anzeigevorrichtung die Abdeckscheibe auf der dem Betrachter abgewandten Seite im Bereich der Punktmatrixanzeige mit einer Black Panel-Folie versehen ist.

Im Sinne der vorliegenden Erfindung wird unter dem Begriff "Black Panel-Folie" eine Folie verstanden, die die Herstellung von Elementen im Tag/Nacht-Design ermöglichen. Diese Elemente zeigen im Tag-Design, also bei ausgeschalteter Punktmatrixanzeige einen Schwarzeindruck, bevorzugt eine ansprechende Tiefenglanzoptik und verbergen die dahinterliegende Punktmatrixanzeige. Im Nacht-Design, also bei eingeschalteter Punktmatrixanzeige hingegen sind die durch die Punktmatrixanzeige wiedergegebenen Informationen und Lichteffekte farbecht sichtbar, das heißt, die Black Panel-Folie beeinflusst nicht den Farbraum der Punktmatrixanzeige.

Bei Black Panel-Folien handelt es sich um Kunststofffolien umfassend ein grau eingefärbtes transparentes thermoplastisches Material. Bevorzugt umfasst die Black Panel-Folie mindestens eine Schicht, wobei diese mindestens eine Schicht ein grau eingefärbtes transparentes thermoplastisches Material umfasst. Besonders bevorzugt umfasst die Black Panel-Folie mindestens eine weitere Schicht umfassend ein thermoplastisches Material, beispielsweise umfassend Streuadditive.

Bei dem transparenten thermoplastischen Material, welches in den erfindungsgemäßen Black Panel-Folien umfasst ist, handelt es sich um die transparenten thermoplastischen Materialien, die in dieser Anmeldung in Zusammenhang mit der Abdeckscheibe beschrieben werden.

Gemäß der vorliegenden Erfindung wird unter einem grau eingefärbten thermoplastischen Material eine Zusammensetzung verstanden, die durch die CIELab-Farbkoordinaten L* kleiner als 40, a* kleiner als 15 und größer als -15, bevorzugt kleiner als 10 und größer als -10, und b* kleiner als 15 und größer als -15, bevorzugt kleiner als 10 und größer als -10, bestimmt bei einer Dicke von 2 mm gemäß ISO 13468-2:2006 (D65, 10°) in Transmission gemessen, beschrieben werden.

Gemäß der vorliegenden Erfindung weist eine Black Panel-Folie eine Transmission Ty von 10 bis 70 %, bevorzugt von 15 bis 55 %, besonders bevorzugt von 20 bis 50 %, und zusätzlich eine Trübung kleiner als 5%, bevorzugt kleiner als 3%, und besonders bevorzugt kleiner als 2% auf. Die Transmission Ty wird bestimmt nach ISO 13468-2:2006 (D65, 10°). Die Trübung wird bestimmt nach ASTM D1003:2013.

Black Panel-Folien gemäß der vorliegenden Erfindung haben eine Dicke von 0,05 bis 1 mm, bevorzugt von 0,1 bis 0,5 mm, besonders bevorzugt von 0,15 bis 0,4 mm.

Die Black Panel-Folie wird bevorzugt durch Spritzgießen, besonders bevorzugt durch Hinterspritzen mit der Abdeckscheibe verbunden. In einer alternativen Ausführungsform wird die Black Panel-Folie bevorzugt durch einen optischen transparenten Kleber mit der Abdeckscheibe verbunden.

Für die vorliegende Erfindung geeignete Black Panel-Folien sind zum Beispiel in WO 2014/108395 A1 beschrieben.

Weiter bevorzugt ist es so, dass bei der erfindungsgemäßen Anzeigevorrichtung der Krümmungswinkel an der mindestens einen Stelle, an der die Abdeckscheibe gekrümmt ist, von 45° bis 175°, bevorzugt von 60° bis 150°, besonders bevorzugt von 90° bis 120° beträgt, wobei für den Fall, dass die Abdeckscheibe mehrere Stellen aufweist, die gekrümmt sind, die Krümmungswinkel gleich oder verschieden sein können.

Weiter bevorzugt ist es so, dass bei der erfindungsgemäßen Anzeigevorrichtung der Krümmungsradius an der mindestens einen Stelle, an der die Anzeigevorrichtung gekrümmt ist oder gewellt ist, von 0,5 mm bis 500 mm, bevorzugt von 1 mm bis 200 mm, besonders bevorzugt von 2 mm bis 100 mm, insbesondere bevorzugt von 5 bis 50 mm beträgt, wobei für den Fall, dass die Abdeckscheibe mehrere Stellen aufweist, die gekrümmt sind, die Krümmungsradien gleich oder verschieden sein können.

Weiter bevorzugt ist es so, dass bei der erfindungsgemäßen Anzeigevorrichtung für mindestens zwei der mindestens zwei Anzeige-Elemente gilt, dass die jeweilige Fläche des Anzeige-Elements, die der Abdeckscheibe zugewandt ist, eine der zugewandten Seite der Abdeckscheibe entsprechende Krümmung aufweist.

Dadurch wird optische Kontaktierung ("Optical Bonding") zwischen Display und Abdeckscheibe möglich, wodurch die internen Reflexionen reduziert und die Qualität der angezeigten Information gesteigert wird. Optische Kontaktierung bedeutet, dass etwaige kleinere, beispielsweise fertigungsbedingte, Hohlräume zwischen der Abdeckscheibe und einem oder mehreren der Anzeige-Elemente mit dem bereits oben erwähnten Kleber gefüllt und damit überbrückt werden können, um Spiegelungen an den Grenzflächen solcher Hohlräume zu reduzieren bzw. zu vermeiden.

Interne Reflexionsverluste können alternativ oder zusätzlich auch dadurch vermieden werden, dass zwischen der Abdeckscheibe und der Fläche des Anzeige-Elements, die der Abdeckscheibe zugewandt ist, ein definierter, gleichbleibender Luftspalt vorgesehen ist. Dieser Luftspalt beträgt von 300 µm bis 5 cm, bevorzugt 1 mm bis 2 cm. Die internen Grenzflächen, die durch den Luftspalt entstehen, sind dabei antireflektiv ausgerüstet, z.B. durch Antireflexbeschichtung oder entsprechende Nanostrukturierung.

Gegenstand der vorliegenden Erfindung ist auch die Verwendung der erfindungsgemäßen Anzeigevorrichtung im Fahrgastraum eines Kraftfahrzeugs.

Dabei soll die erfindungsgemäße Anzeigevorrichtung zum Einbau in ein oder mehrere Bestandteile des Fahrgastraums von Kraftfahrzeugen geeignet sein.

Dabei sind die ein oder mehreren Bestandteile des Fahrgastraums von Kraftfahrzeugen bevorzugt ausgewählt aus der Gruppe: vorderer Anzeige- und Bedienbereich, Türverkleidung, Fahrzeughimmel.

Bevorzugt ist die erfindungsgemäße Anzeigevorrichtung geeignet, in den vorderen Anzeige- und Bedienbereich eines Kraftfahrzeugs eingebaut zu werden, insbesondere in das Armaturenbrett oder in den Centerstack.

Gegenstand der vorliegenden Erfindung ist auch ein Kraftfahrzeug, das die erfindungsgemäße Anzeigevorrichtung aufweist.
(15) Bevorzugt handelt es sich bei diesem Kraftfahrzeug um ein Personenkraftfahrzeug.

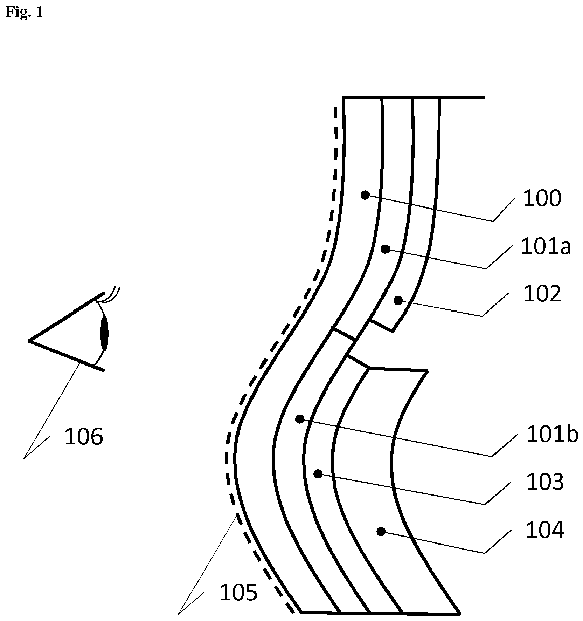

Die Erfindung soll durch die nachfolgende Figur beispielhaft erläutert werden, ohne dass die Erfindung auf die in der Figur gezeigte Ausführungsform beschränkt werden soll.

Es sind:
- 100: Abdeckscheibe;
- 101a: Optischer Kleber für Projektionsfläche;
- 101b: Optischer Kleber für Punktmatrixanzeige;
- 102: Projektionsfläche;
- 103: Black Panel-Folie;
- 104: Punktmatrixanzeige, hier in einer gebogenen Ausführung;
- 105: Deckschicht (Lack oder Folie);
- 106: Betrachter.

## Patentansprüche

1. Anzeigevorrichtung umfassend:
eine einstückige Abdeckscheibe,
mindestens zwei verschiedene Anzeigeelemente,
wobei die Abdeckscheibe zumindest auf ihrer Vorderseite an mindestens einer Stelle gekrümmt ist, bevorzugt dreidimensional gekrümmt ist, und
wobei sich alle der mindestens zwei Anzeige-Elemente auf der Rückseite der Abdeckscheibe befinden, und,
wobei mindestens eines der mindestens zwei Anzeige-Elemente als Projektionsfläche eingesetzt werden kann, und
wobei mindestens ein anderes der mindestens zwei Anzeige-Elemente als Flachdisplay mit Punktmatrixanzeige ausgestaltet ist, und
wobei die Anzeigevorrichtung dazu geeignet ist, gleichzeitig sowohl ein Head-up-Display als auch ein Head-down-Display zu sein, oder dazu geeignet ist, gleichzeitig sowohl ein Display, das ein Betrachter beim Geradeaussehen sieht, als auch ein Display, das ein Betrachter beim Sehen mit nach links oder nach rechts gewandtem Kopf sieht, zu sein.

2. Anzeigevorrichtung nach Anspruch 1, wobei die Flächennormale im Flächenmittelpunkt der der Abdeckscheibe zugewandten Fläche einer ersten der mindestens zwei Anzeige-Elemente nicht parallel zu der Flächennormalen im Flächenmittelpunkt der der Abdeckscheibe zugewandten Fläche einer zweiten der mindestens zwei Anzeige-Elemente ist.

3. Anzeigevorrichtung nach Anspruch 1 oder 2, wobei das mindestens eine Anzeige-Element, das als Projektionsfläche eingesetzt werden kann, elektrisch zwischen einem transparenten und einen nicht-transparenten Zustand umschaltbar ist.

4. Anzeigevorrichtung nach einem der Ansprüche 1 bis 3, wobei die Abdeckscheibe im Wesentlichen aus Glas oder einem transparenten thermoplastischen Material besteht.

5. Anzeigevorrichtung nach einem der Ansprüche 1 bis 4, wobei das transparente thermoplastische Material ausgewählt ist aus aromatischem Polycarbonat oder Polymethylmethacrylat.

6. Anzeigevorrichtung nach einem der Ansprüche 1 bis 5, wobei die Abdeckscheibe an mindestens einer Stelle in Form einer Welle mehrfach gekrümmt ist, bevorzugt an mindestens einer Stelle in Form einer Welle mehrfach dreidimensional gekrümmt ist.

7. Anzeigevorrichtung nach einem der Ansprüche 1 bis 6, wobei die Abdeckscheibe auf der dem Betrachter abgewandten Seite im Bereich der Punktmatrixanzeige mit einer Black Panel-Folie versehen ist.

8. Anzeigevorrichtung nach einem der Ansprüche 1 bis 7, wobei der Krümmungswinkel an der mindestens einen Stelle, an der die Abdeckscheibe gekrümmt ist, von 45° bis 175°, bevorzugt von 60° bis 150°, besonders bevorzugt von 90° bis 120° beträgt, wobei für den Fall, dass die Abdeckscheibe mehrere Stellen aufweist, die gekrümmt sind, die Krümmungswinkel gleich oder verschieden sein können.

9. Anzeigevorrichtung nach einem der Ansprüche 1 bis 8, wobei der Krümmungsradius an der mindestens einen Stelle, an der die Anzeigevorrichtung gekrümmt ist oder gewellt ist, von 0,5 mm bis 500 mm, bevorzugt von 1 mm bis 200 mm, besonders bevorzugt von 2 mm bis 100 mm, insbesondere bevorzugt von 5 bis 50 mm beträgt, wobei für den Fall, dass die Abdeckscheibe mehrere Stellen aufweist, die gekrümmt sind, die Krümmungsradien gleich oder verschieden sein können.

10. Anzeigevorrichtung nach einem der Ansprüche 1 bis 9, wobei für mindestens zwei der mindestens zwei Anzeige-Elemente gilt, dass die jeweilige Fläche des Anzeige-Elements, die der Abdeckscheibe zugewandt ist, eine der zugewandten Seite der Abdeckscheibe entsprechende Krümmung aufweist.

11. Verwendung der Anzeigevorrichtung nach einem der Ansprüche 1 bis 10 im Fahrgastraum eines Kraftfahrzeugs.

12. Verwendung der Anzeigevorrichtung nach Anspruch 11, wobei die Anzeigevorrichtung geeignet ist zum Einbau in ein oder mehrere Bestandteile des Fahrgastraums von Kraftfahrzeugen, wobei die ein oder mehreren Bestandteile des Fahrgastraums von Kraftfahrzeugen ausgewählt sind aus der Gruppe: vorderer Anzeige- und Bedienbereich, Türverkleidung, Fahrzeughimmel.

13. Verwendung der Anzeigevorrichtung nach Anspruch 12, wobei die Anzeigevorrichtung geeignet ist, in den vorderen Anzeige- und Bedienbereich eines Kraftfahrzeugs eingebaut zu werden, insbesondere in das Armaturenbrett oder in den Centerstack.

14. Kraftfahrzeug, das eine Anzeigevorrichtung nach einem der Ansprüche 1 bis 10 aufweist.

15. Kraftfahrzeug nach Anspruch 14, wobei es sich bei dem Kraftfahrzeug um ein Personenkraftfahrzeug handelt.
